# EUROPEAN PATENT APPLICATION

(11) **EP 4 640 334 A1**
(43) Date of publication of application: **29.10.2025**
(21) Application number: 23907103.8
(22) Date of filing: 20.12.2023
(51) Int. Cl.: B21D 26/033, B21D 22/20, B21D 24/00

(54) **METHOD FOR DISPLAYING OPERATIONAL STATUS OF MOLDING APPARATUS**

(30) Priority: 22.12.2022 JP 2022205789
(71) Applicant: Sumitomo Heavy Industries, Ltd., Tokyo 141-6025 (JP)
(72) Inventor: KOUYAMA, Eiji, Niihama-shi, Ehime 792-8588 (JP)
(74) Representative: Louis Pöhlau Lohrentz
(86) International application number: PCT/JP2023/045779
(87) International publication number: WO 2024/135743

(57) **Abstract**

A method of displaying an operational status of a forming device, which heats a metal material to form the metal material, on a screen of a display device, includes: displaying an operational status with a time from past X hours on a time axis, using at least one display unit of a first display unit that displays the operational status of the forming device in the past X hours, which is arbitrarily settable from a current time point, at an operation ratio of 0 to 100%, a second display unit that distinguishes and displays whether or not a formed product is changed, and a third display unit that displays cumulative numbers of formed products and pass/fail thereof for each time t.

## Description

### Technical Field

The present invention relates to a method of displaying an operational status of a forming device.

### Background Art

In the related art, a device disclosed in PTL 1 is known as a forming device that forms a metal material. The forming device heats a metal material and brings the heated metal material into contact with a forming die to perform forming.

### Citation List

### Patent Literature

[PTL 1] Japanese Unexamined Patent Publication No. 2009-220141

### Summary of Invention

### Technical Problem

Here, in recent years, since a process such as a heating process or a fluid supply process is applied to a forming device that performs heating or a forming device that supplies fluid unlike in a forming device that simply performs pressing or the like, the forming device has been complicated. As the process is complicated in this way, it is required to improve the quality and productivity of a product.

The present invention has been made to solve such a problem, and an object of the present invention is to provide a method of displaying an operational status of a forming device that can improve the quality and productivity of a product formed by the forming device.

### Solution to Problem

A method of displaying an operational status of a forming device according to an aspect of the present invention is a method of displaying an operational status of a forming device, which heats a metal material to form the metal material, on a screen of a display device. The method includes: displaying an operational status with a time from past X hours on a time axis, using at least one display unit of a first display unit that displays the operational status of the forming device in the past X hours, which is arbitrarily settable from a current time point, at an operation ratio of 0 to 100%, a second display unit that distinguishes and displays whether or not a formed product is changed, and a third display unit that displays cumulative numbers of formed products and pass/fail thereof for each time t.

In the method of displaying the operational status of the forming device, it is possible to display the operational status with a time from the past X hours on the time axis using at least one display unit of the first display unit, the second display unit, and the third display unit described above. In this case, since the operational status or the operation ratio of the forming device can be easily checked at any time, information on the operational status according to the time can be easily identified. Therefore, it is possible to improve the quality and productivity of products formed by the forming device.

The display device may display a fourth display unit that displays a comprehensive graph showing a change status of device operation data related to forming quality for the past X hours, which is arbitrarily settable from the current time point, with a product on a horizontal axis. In this case, it is possible to easily identify the transition of forming quality in the forming device.

There is provided a method of displaying an operational status of a forming device using a screen of a display device provided in a management device for a multi-unit management system that manages a plurality of forming devices. The display device displays an operation status image in which operation statuses of the plurality of forming devices are collectively displayed in a split screen format for the plurality of forming devices, and the display device also displays an overall image in which an operational status of only the corresponding forming device is shown in detail in a case where a specific portion of a split screen for each forming device in the operation status image is clicked.

In the method of displaying the operational status of the forming device, the operation statuses of the plurality of forming devices can be collectively identified in the operation status image. Further, the operation status of a specific forming device can be identified in the overall image. Accordingly, it is possible to appropriately manage the plurality of forming devices, and to appropriately improve the quality and productivity of products formed by the forming devices.

The display device may display a fifth display unit that displays an abnormality history image by being selected from a menu screen provided separately from the first, second, and third display units. In this case, the abnormality history of the forming device can be identified on the fifth display unit.

The detection contents of at least one of heating abnormality and fluid sealing leakage abnormality may be detected from the change status of the device operation data related to the forming quality displayed on the fourth display unit to detect state abnormality, and the detection contents may be displayed on the display device. In this case, it is possible to quickly detect state abnormality based on the device operation data that affects forming quality, and to notify a worker of the state abnormality.

### Advantageous Effects of Invention

According to the present invention, it is possible to provide a method of displaying an operational status of a forming device that can improve the quality and productivity of a product formed by the forming device.

### Brief Description of Drawings

Fig. 1 is a schematic configuration diagram showing a configuration of a production management system that executes a method of displaying an operational status of a forming device according to the present embodiment.
Fig. 2 is a schematic diagram showing a configuration of the forming device.
Fig. 3 is a diagram showing an example of an image displayed on a display device.
Fig. 4 is a diagram showing an example of an image displayed on the display device.
Fig. 5 is a diagram showing an example of an image displayed on the display device.
Fig. 6 is a diagram showing an example of an image displayed on the display device.
Fig. 7 is a schematic configuration diagram showing a production management system according to a modification example.
Fig. 8 is a diagram showing an example of an image displayed on a display device.
Fig. 9 is a diagram showing an example of an image displayed on the display device.
Fig. 10 is a diagram showing an example of an image displayed on the display device.

### Description of Embodiments

Hereinafter, a preferred embodiment of the present invention will be described with reference to the drawings. The same portions or equivalent portions will be denoted in the drawings by the same reference numerals, and repeated description thereof will be omitted.

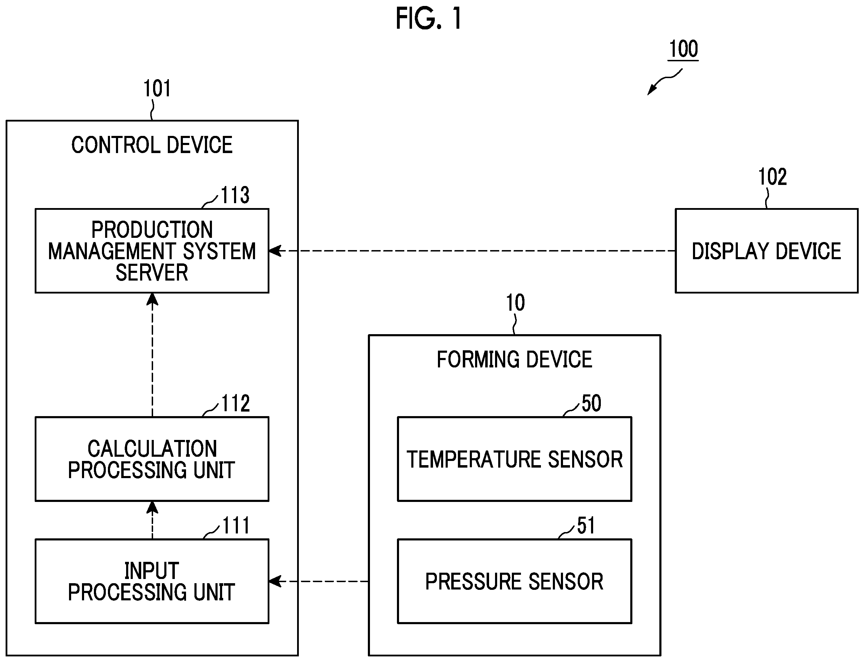

Fig. 1 is a schematic configuration diagram showing a configuration of a production management system 100 that executes a method of displaying an operational status of a forming device according to the present embodiment. The production management system 100 is a system that performs the production management of a forming device 10 for forming a metal material. As shown in Fig. 1, the production management system 100 includes a forming device 10, a control device 101, and a display device 102. In the present embodiment, a metal pipe material 5 is used as the metal material.

The forming device 10 is a device that processes the heated metal pipe material 5. In the present embodiment, the forming device 10 presses and forms the heated metal pipe material 5. In the present embodiment, a forming device that supplies fluid to the heated metal pipe material 5 and brings the metal pipe material 5 into contact with a forming surface of a forming die to form and quench a metal pipe having a hollow shape is adopted as the forming device 10. The forming device 10 includes a temperature sensor 50 and pressure sensors 51.

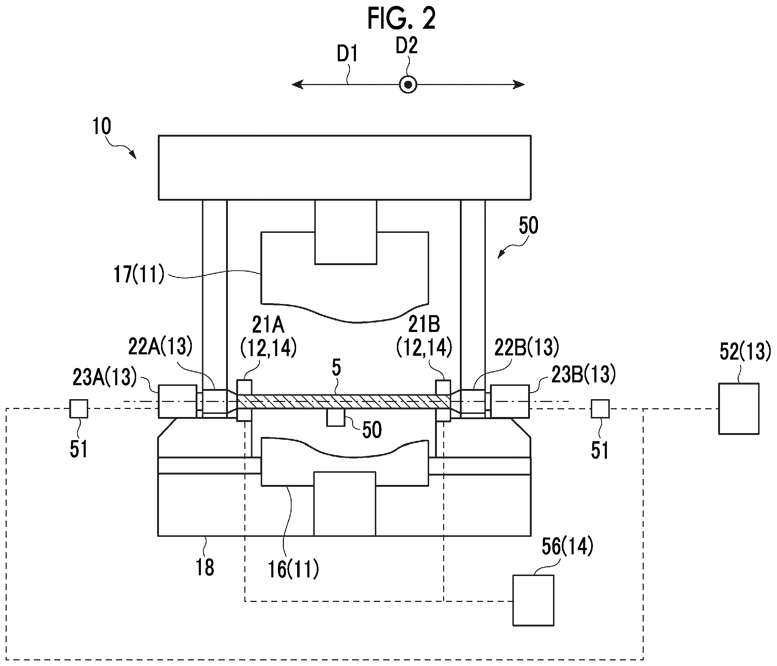

Fig. 2 is a schematic diagram showing a configuration of the forming device 10. As shown in Fig. 2, in the present embodiment, the forming device 10 is installed on a horizontal surface. The forming device 10 includes a forming die 11, a holding unit 12, fluid supply units 13, and a heating unit 14. In the present specification, the metal pipe material 5 refers to a hollow article of which forming to be performed by the forming device 10 is not yet completed. The metal pipe material 5 is a pipe material made of a type of steel that can be quenched. A direction in which a reference axis of the metal pipe material 5 extends in a case where the metal pipe material 5 is installed in the forming device 10 may be referred to as an "axial direction D1". Further, among horizontal directions, a direction perpendicular to the axial direction D1 may be referred to as a "width direction D2".

The forming die 11 is a die that forms a metal pipe from the metal pipe material 5, and includes a lower die 16 and an upper die 17 that face each other in a vertical direction. The lower die 16 and the upper die 17 are formed of blocks made of steel. Each of the lower die 16 and the upper die 17 is provided with a recessed portion in which the metal pipe material 5 is accommodated. In a state where the lower die 16 and the upper die 17 are in close contact with each other (die closed state), the respective recessed portions form a space having a target shape into which the metal pipe material 5 is to be formed. Therefore, the surface of each of the recessed portions is a forming surface of the forming die 11. The lower die 16 is fixed to a base stage 18 via a die holder or the like. The upper die 17 is fixed to a slide of a drive mechanism via a die holder or the like. The drive mechanism is a mechanism that moves at least one of the lower die 16 and the upper die 17. Further, flow channels through which cooling water for cooling the dies 16 and 17 flows are formed in the dies 16 and 17.

The holding unit 12 is a mechanism that holds the metal pipe material 5 disposed between the lower die 16 and the upper die 17. The holding unit 12 includes a holding member 21A that is provided on one end side of the forming die 11 in the axial direction D1 to hold the metal pipe material 5, and a holding member 21B that is provided on the other end side of the forming die 11 in the axial direction D1 to hold the metal pipe material 5. Each of the holding members 21A and 21B provided on both sides in the axial direction D1 is divided into an upper member and a lower member, and clamps an end portion of the metal pipe material 5 therebetween in the vertical direction to hold the metal pipe material 5. Each of the holding members 21A and 21B is provided with a drive mechanism (not shown), and is movable in the vertical direction. The holding member may not be divided into an upper member and a lower member, and may be divided into, for example, a left member and a right member.

The fluid supply units 13 are mechanisms that supply high-pressure fluid into the metal pipe material 5 held between the lower die 16 and the upper die 17. The fluid supply units 13 supply high-pressure fluid to the metal pipe material 5, which is in a high-temperature state, to expand the metal pipe material 5. The fluid supply units 13 are provided on both end sides of the forming die 11 in the axial direction D1. The fluid supply units 13 include nozzles 22A and 22B that supply the fluid from opening portions of the end portions of the metal pipe material 5 into the metal pipe material 5, and drive mechanisms 23A and 23B that cause the nozzles 22A and 22B to advance to and retreat from the opening portions of the metal pipe material 5, respectively. The fluid supply units 13 may supply gas, such as high-pressure air or inert gas, as the fluid. The fluid supply units 13 include a high-pressure gas generation device 52 for supplying high-pressure fluid to the nozzles 22A and 22B. The high-pressure gas generation device 52 supplies high-pressure fluid to the nozzles 22A and 22B. Further, the fluid supply unit 13 and the holding unit 12 including the mechanisms that move the metal pipe material 5 in the vertical direction may be the same unit.

The heating unit 14 is a unit that heats the metal pipe material 5. The heating unit 14 energizes the metal pipe material 5 to heat the metal pipe material 5. The heating unit 14 includes the holding members 21A and 21B as electrodes. The heating unit 14 causes current to flow through the metal pipe material 5 from a power supply 56 via the holding members 21A and 21B, which are electrodes, in a state where the metal pipe material 5 is held by the holding members 21A and 21B, which are electrodes.

The forming device 10 includes the temperature sensor 50 that detects the temperature of the metal pipe material 5. The temperature sensor 50 may be a type of sensor that detects the temperature of the metal pipe material 5 by being in contact with the metal pipe material 5, such as a thermocouple. Alternatively, the temperature sensor 50 may be a type of sensor that detects the temperature of the metal pipe material 5 without being in contact with the metal pipe material 5 by using infrared rays or radiant heat. The forming device 10 includes the pressure sensors 51 that detect a fluid pressure in the metal pipe material 5. The pressure sensors 51 are provided on a supply line that extends from the high-pressure gas generation device 52 to the nozzles 22A and 22B.

As shown in Fig. 1, the control device 101 may include, for example, a processor, a memory, a storage, and a communication interface, and may be configured as a computer. The processor is a calculation unit such as a central processing unit (CPU). The memory is a storage unit such as a read only memory (ROM) or a random access memory (RAM). The storage is a storage unit (a storage medium) such as a hard disk drive (HDD). The communication interface is a communication unit that realizes data communication. The processor controls the memory, the storage, and the communication interface, and realizes a function as the control device 101 to be described later. In the control device 101, for example, a program stored in the ROM is loaded into the RAM, and the program loaded into the RAM is executed by the CPU to realize various functions. The control device 101 includes an input processing unit 111, a calculation processing unit 112, and a production management system server 113.

The input processing unit 111 is formed of an AD converter and the like, converts signals input from the sensors 50 and 51 of the forming device 10 into digital signals, and transmits the digital signals to the calculation processing unit 112.

The calculation processing unit 112 creates quality control data for each formed product, based on information obtained from the input processing unit 111. The calculation processing unit 112 creates the temperature of each metal pipe material 5 in a case where the metal pipe material 5 is subjected to hot forming, as a production management parameter. Further, the calculation processing unit 112 creates the fluid pressure of each metal pipe material 5 in a case where the metal pipe material 5 is formed using fluid, as a production management parameter. For example, the calculation processing unit 112 creates the maximum value of a heating temperature during heating, a time required for heating, the maximum value of a fluid pressure during the supply of the high-pressure fluid, and a charging time, as production management parameters. The calculation processing unit 112 creates an ID for each formed product, associates the above-described production management parameters with the IDs to create a file, and then transmits the file to the production management system server 113 using FTP or the like.

The display device 102 is a device that has access to the production management system server 113 to browse data and to display browsing information to a user. The display device 102 is formed of a portable terminal such as a personal computer or a smartphone. In a case where a browser is installed, the display device 102 can browse the data of the production management system server 113. Further, in a case where the production management system server 113 detects abnormal data, the production management system server 113 can notify the display device 102 of abnormality.

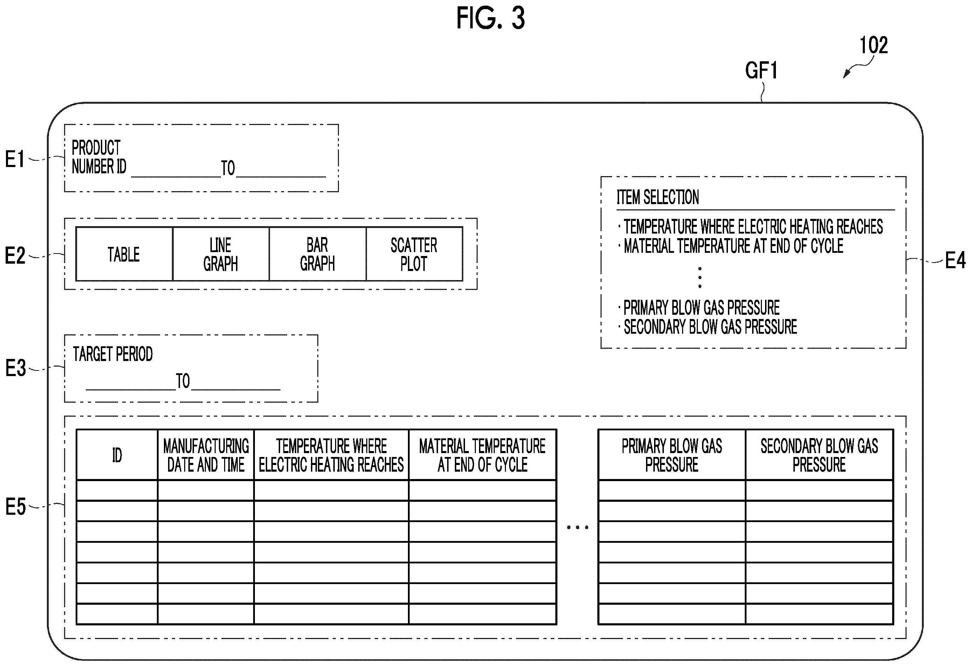

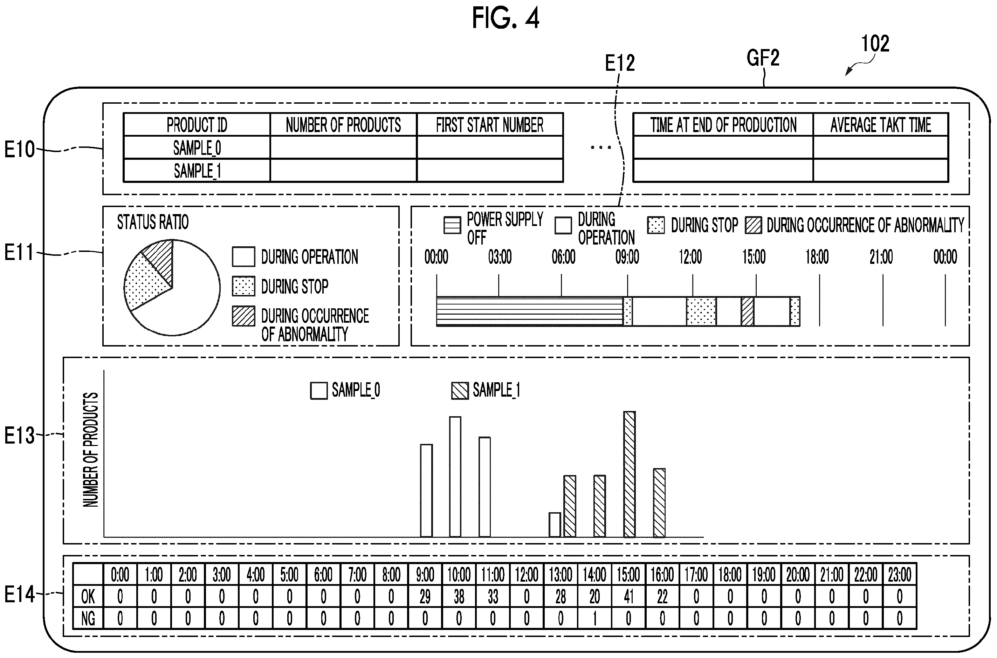

Next, an example of an image displayed on the display device 102 will be described with reference to Figs. 3 and **4****.** Fig. 3 is an example of an image showing the production parameters of a formed product produced in the past. The display device 102 displays an image GF1 shown in Fig. **3****.** The image GF1 includes display areas E1 to E5.

The display area E1 is an area to which information required to sort IDs of formed products to be browsed are to be input. A user inputs the IDs of the formed products to be browsed to the display area E1. The display area E2 is an area in which a display format in a case where information to be browsed is displayed is to be selected. In the display area E2, a display format can be selected from "table", "line graph", "bar graph", and "scatter plot". The user clicks and selects a desired display format.

The display area E3 is an area to which information required to sort target periods of formed products to be browsed are to be input. The user inputs the target periods of the formed products to be browsed to the display area E3. The display area E4 is an area in which an item to be browsed is selected among the production management parameters. Examples of the item include actual current performance of electric heating, a temperature where electric heating reaches, a material temperature at the end of a cycle, an electric heating time, a primary blow time, a secondary blow time, the amount of elongation of the metal pipe material 5 at the time of completion of heating, a primary blow gas pressure (left), a primary blow gas pressure (right), a secondary blow gas pressure (left), and a secondary blow gas pressure (right). The user clicks and selects an item to be browsed in the display area E4.

The display area E5 is an area in which the production management parameters are displayed, based on the information selected in the display areas E1 to E4 by the user. In the example shown in Fig. 3, a table is selected as a display format. Accordingly, the production management parameters that are associated with each formed product corresponding to the selected ID are displayed at corresponding positions in the table. In a case where a line graph is selected as a display format, a line graph in which an ID is represented on a horizontal axis and a production management parameter represented on a vertical axis is displayed in the display area E5. In this case, a threshold used to determine abnormality can be displayed on the graph.

Fig. 4 is an image showing a production status of formed products that are formed by the forming device 10 in one day on the selected day. The display device 102 displays an image GF2 shown in Fig. 4. The image GF2 includes display areas E10 to E13. The display area E10 is an area in which IDs of formed products manufactured on the selected day are shown. In Fig. 4, formed products having two types of IDs, that is, an ID of "SAMPLE _0" and an ID of "SAMPLE_1" are manufactured. The metal pipe material 5 to be formed is changed between "SAMPLE_0" and "SAMPLE**_**1". For this reason, a die used in the forming device 10 is also changed. Even in a case where a die is changed as described above, the production status can be displayed on the display device. The display area E10 corresponds to a "second display unit" that distinguishes and displays whether or not a formed product is changed.

The display area E11 is an area in which the operation status of the forming device 10 on the selected day is shown in a pie chart. A ratio of a time when the forming device 10 corresponds to "during an operation", a ratio of a time when the forming device 10 corresponds to "during stop", and a ratio of a time when the forming device 10 corresponds to "during the occurrence of abnormality" are shown in the display area E11. In this way, it is possible to display the ratios of the statuses on a daily basis, and it is possible to display the ratios of the statuses on a monthly or yearly basis. Therefore, it is possible to identify the production status of equipment. The display area E11 corresponds to a "first display unit" that displays the operational status of the forming device in the past X hours, which can be arbitrarily set from the current time point, at an operation ratio of 0 to 100%.

The display area E12 is an area in which the operation status of the forming device 10 on the selected day is shown for each time. A time when the forming device 10 corresponds to "during an operation", a time when the forming device 10 corresponds to "during stop", and a time when the forming device 10 corresponds to "during the occurrence of abnormality" are shown in the display area E12. In the example shown in Fig. 4, it is possible to check that abnormality occurs around 15 o'clock. A time when the power supply of the forming device 10 is in an OFF status is also displayed in the display area E12. In addition, in Fig. 4, a state of the forming device 10 on the day of operation is shown, and data from 0 o'clock to the current time is shown in the display area E12 since the current time is around 17 o'clock.

In a case where state abnormality occurs in the forming device 10, the production management system 100 causes the display device 102 to display the state abnormality as in the display areas E11 and E12. The production management system 100 detects the state abnormality by detecting the detection contents of at least one of heating abnormality and fluid sealing leakage abnormality. Further, the production management system 100 causes the display device 102 to display the detection contents. Specifically, in a case where a portion indicating "during the occurrence of abnormality" is clicked in the display area E12, a screen is switched to an alarm history screen and the contents of the state abnormality can be checked.

The display area E13 is an area in which a graph showing the production status of formed products in each time period is displayed. The number of formed products corresponding to each ID in each time period is shown in the display area E13. Further, in a case where a material to be formed is changed, the production management system server 113 changes a display format on the display device 102. Here, since formed products having two types of IDs, that is, an ID of "SAMPLE_0" and an ID of "SAMPLE_1" are manufactured, graphs showing the numbers of the formed products having the respective IDs are shown in a state of being distinguished from each other. The metal pipe material 5 to be formed (the die of the forming device 10) is changed in the 13th era. For this reason, both the graph of "SAMPLE_0" and the graph of "SAMPLE_1" are shown in the 13th era. Since only any one of "SAMPLE_0" and "SAMPLE_1" is manufactured in other time periods, only one graph is shown.

A display area E14 is an area in which the numbers of OK products and NG products in each time period are shown. Here, the numbers of OK products and NG products of both the formed products of "SAMPLE_0" and "SAMPLE_1" are shown. The display area E13 and the display area E14 correspond to a "third display unit" that displays the cumulative numbers of formed products and pass/fail thereof for each time **t.** The expressions of pass/fail are not particularly limited and pass/fail may be expressed as **"OK"** and **"NG".**

As described above, the display device 102 can display the operational status with a time from the past X hours on a time axis, using at least one display unit of the display area E11 (first display unit), the display area E10 (second display unit), and the display areas E13 and E14 (third display unit).

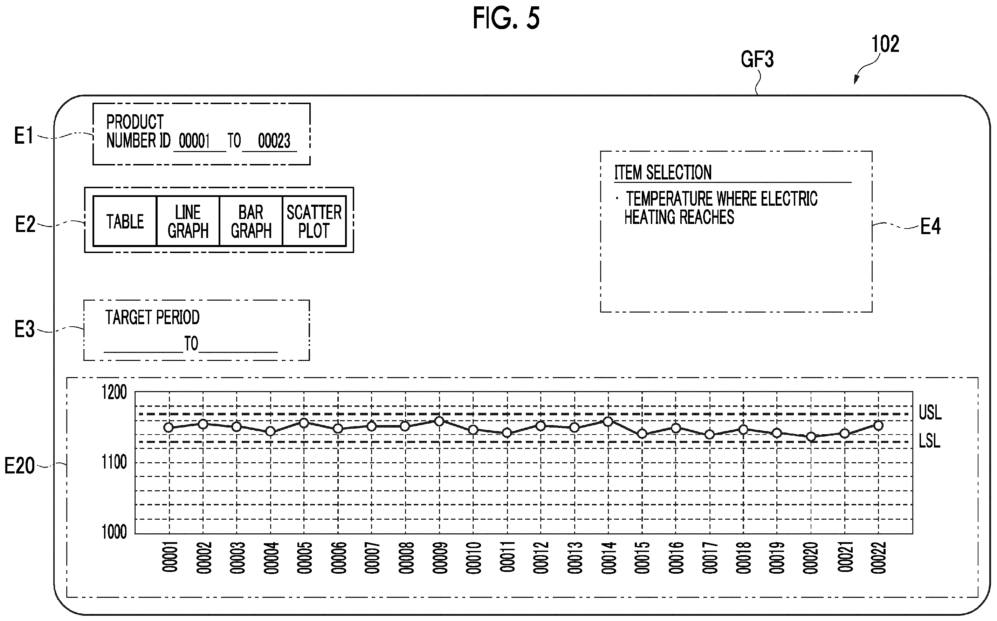

Fig. 5 is an image in which the table of the display area E5 of the image GF2 shown in Fig. 3 is changed to a trend graph. The display device 102 displays an image GF3 shown in Fig. 5. The image GF3 includes display areas E1 to E4 and a display area E20. A trend graph showing a change status of device operation data related to the forming quality of each formed product is shown in the display area E20. The device operation data related to the forming quality includes a material temperature after heating, a material temperature before forming, the position of a material before forming, a fluid pressure, a die clamping force, and the like. A temperature where electric heating reaches is set on a vertical axis of the display area E20. In the graph, "USL" is an allowable upper limit temperature and "LSL" is an allowable lower limit temperature. The display area E20 corresponds to a "fourth area" that displays a comprehensive graph showing a change status of device operation data related to forming quality for the past X hours, which can be arbitrarily set from the current time point, with a product on a horizontal axis.

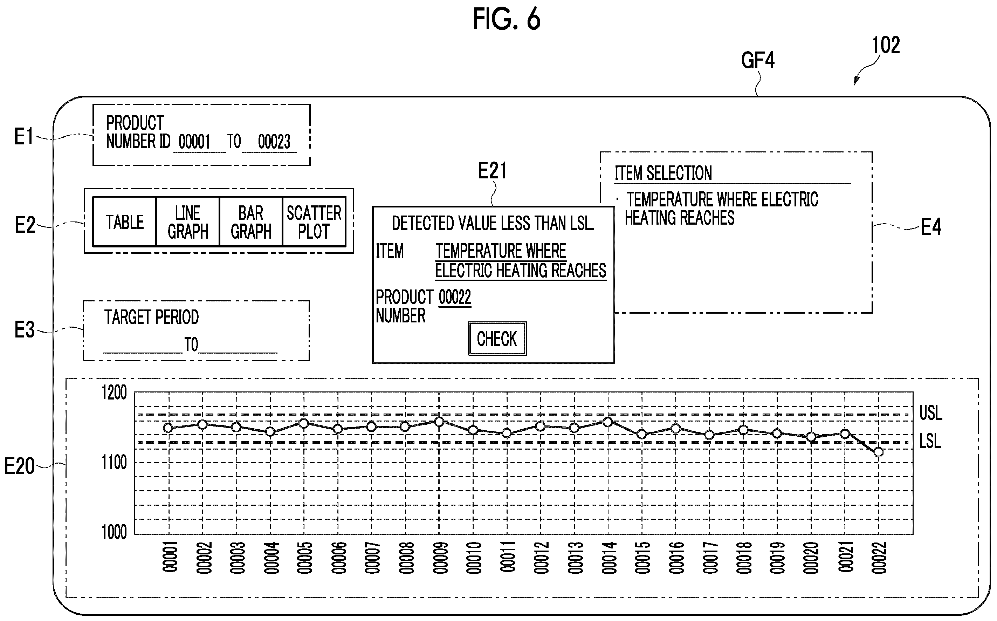

Fig. 6 is an image in a case where abnormality is detected based on the trend graph shown in Fig. **5****.** The display device 102 displays an image GF4 shown in Fig. 6. The image GF4 includes display areas E1 to E4, a display area E20, and a display area E21. Detection contents in a case where the production management system 100 detects state abnormality by detecting the detection contents of at least one of heating abnormality and fluid sealing leakage abnormality from the change status of device operation data related to forming quality displayed on the display area 20 (fourth display unit) are displayed in the display area E21. A status in a case where a temperature where electric heating reaches is lower than the lower limit temperature in the product number 22 is shown in Fig. 6.

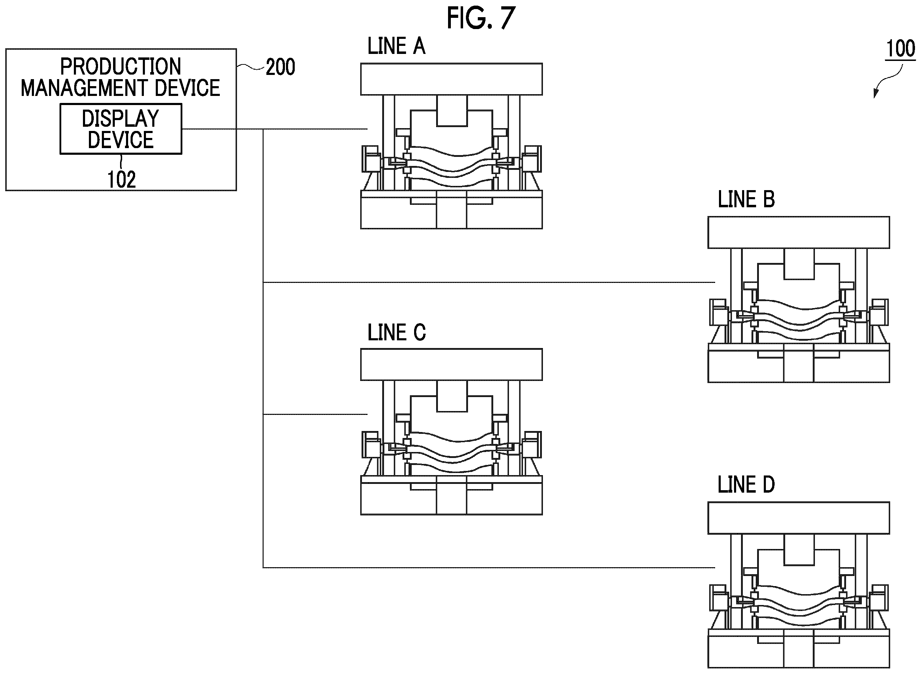

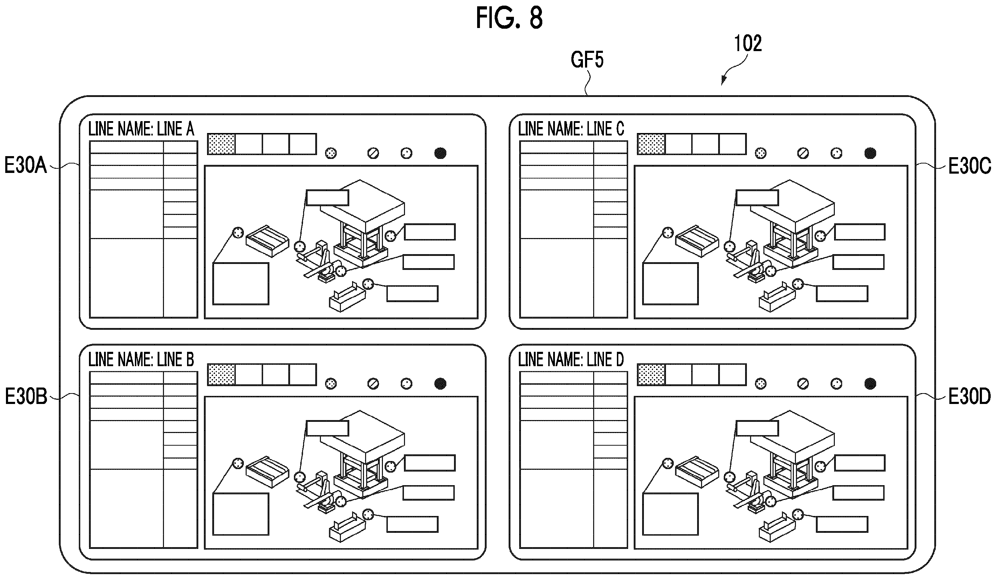

Here, as shown in Fig. 7, the production management system 100 may be a multi-unit management system that manages a plurality of forming devices 10. A management device 200 is provided with a display device 102. The display device 102 can display the operational statuses of the plurality of forming devices 10. Here, four forming devices 10 of lines A to D are shown, but the number of the forming devices 10 is not particularly limited. In this case, the display device 102 can display an operation status image GF5 shown in Fig. 8. Fig. 8 is an image showing the operation statuses of the plurality of forming devices 10. As shown in Fig. 8, the display device 102 can display the operation status image GF5 in which the operation statuses of the plurality of forming devices 10 are collectively displayed in a split screen format for the plurality of forming devices. The operation status image GF5 includes a display area E30A showing the operation status of the forming device 10 of the line A, a display area E30B showing the operation status of the forming device 10 of the line B, a display area E30C showing the operation status of the forming device 10 of the line C, and a display area E30D showing the operation status of the forming device 10 of the line **D.** However, the number of the display areas E30 varies depending on the number of lines of the forming devices 10.

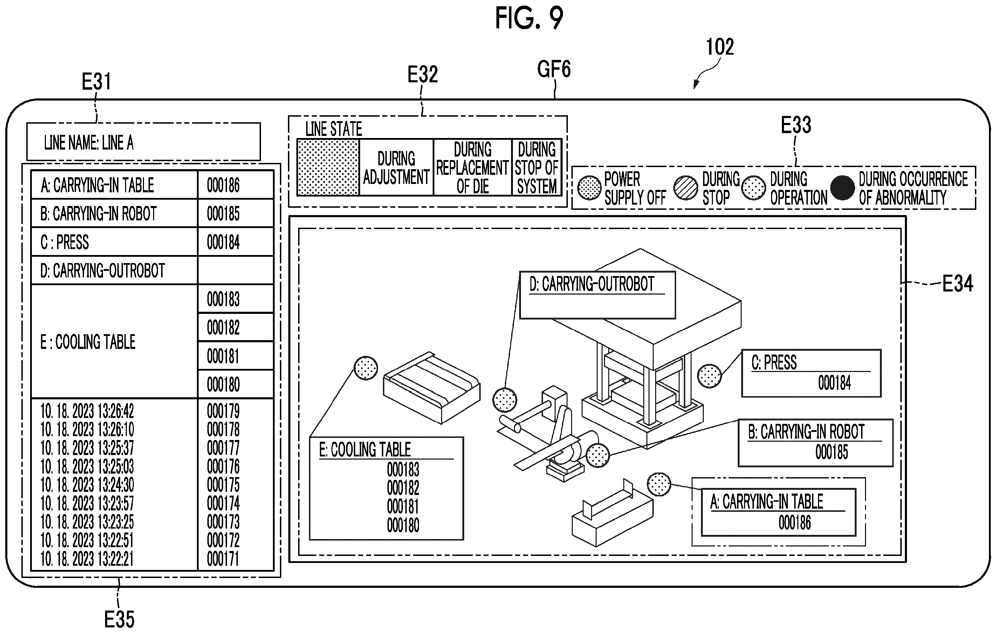

The display device 102 can also display an overall image in which the operational status of only the corresponding forming device is shown in detail in a case where a specific portion of a split screen for each forming device in the operation status image GF5 is clicked. For example, in a case where any of the display areas E30A, E30B, E30C, and E30D of the operation status image GF5 is clicked, the display device 102 displays an overall image of only the clicked line (forming device). Fig. 9 is an example of the overall image. The display device 102 displays an overall image GF6 shown in Fig. **9****.** The overall image GF6 includes display areas E31 to E35. The name of the displayed line is displayed in the display area E31. In the display area E32, the state of the entire line is displayed by the lighting of a lamp at "during production", "during adjustment", "during the replacement of the die", or "during the stop of the system". The lighting states of lamps (A to E) and the description of the contents, which indicate device states shown in the display area E34, are displayed in the display area E33. In the display area E34, state lamps of the respective devices of A to E and the presence states of formed products are displayed in real time together with product number IDs. Further, no formed product is present at a portion where a number is not displayed. In the display area E35, the presence states of formed products in the respective devices of A to E are displayed in real time (the same as the display area E34) together with the product number IDs. Furthermore, the product number IDs of which forming has been completed and completion times are displayed in the lowermost field.

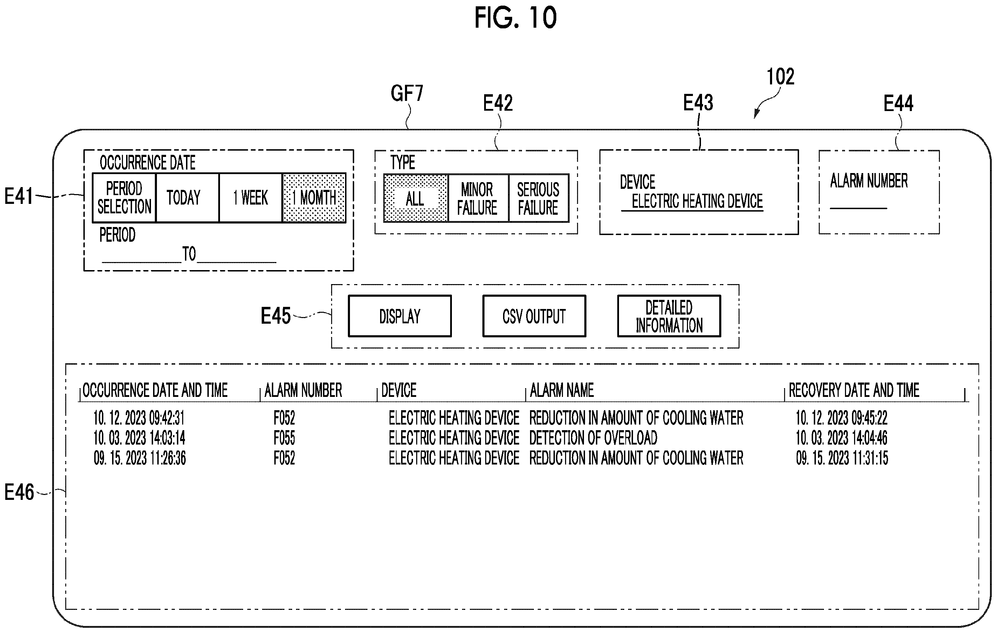

Fig. 10 is an image in which an abnormality history is displayed. The display device 102 displays an image GF7 shown in Fig. 10. The image GF7 includes display areas E41 to E46. A period in which abnormality is to be displayed is selected in the display area E41. Here, periods, such as "period selection: input a period to be displayed in year, month, and day", "today: abnormality that has occurred today", "1 week: abnormality that has occurred for the past 1 week from today", and "1 month: abnormality that has occurred for the past 1 month from today", can be selected. The type of abnormality to be displayed is displayed in the display area E42. Here, the type of abnormality to be displayed includes "ALL: display all the abnormality", "minor failure: display only minor failure (failure of alarm level at which the equipment is not stopped)", and "serious failure: display only serious failure (failure at which the operation of the equipment is **stopped)".** In the display area E43, only abnormality related to a selected device is displayed in a case where the device is selected, and abnormality related to all devices is displayed in a case where no device is selected. The contents to be selectable here include "carrying-in table", "press", "cooling table", "electric heating device", "high-pressure gas generation device", and the like. In the display area E44, only an input alarm number is displayed, and all alarms that are generated are displayed in a case where no alarm number is input. Selection buttons for display and output are displayed in the display area E45. Here, in a case where "display" is selected, the contents selected in the display areas E41 to E44 are displayed in the display area E46. In a case where "CSV output" is selected, the contents selected in the display areas E41 to E44 are not displayed in the display area E46 and a CSV file is output. In a case where an alarm displayed in the display area E46 is selected with a mouse and a button of "detailed information" is then pressed, the detailed contents of the alarm (What kind of abnormality is that?, How to deal with the abnormality?, and the like) are displayed. In a case where the button of "display" in the display area E45 is pressed, alarms having been generated depending on the contents selected in the display areas E41 to E44 are displayed in the display area E46. The display area E46 corresponds to a "fifth display unit" that displays an abnormality history image by being selected from a menu screen provided separately from the display area E11 (first display unit), the display area E10 (second display unit), and the display areas E13 and E14 (third display unit) described above.

Next, the actions and effects of the production management system 100 according to the present embodiment will be described.

A method of displaying an operational status of a forming device 10 according to the present embodiment is a display method of displaying an operational status of a forming device 10, which heats a metal material to form the metal material, on a screen of a display device 102. The method displays the operational status with a time from the past X hours on a time axis, using at least one display unit of a first display unit that displays the operational status of the forming device in the past X hours, which can be arbitrarily set from the current time point, at an operation ratio of 0 to 100%, a second display unit that distinguishes and displays whether or not a formed product is changed, and a third display unit that displays the cumulative numbers of formed products and pass/fail thereof for each time t.

In the method of displaying the operational status of the forming device 10, it is possible to display the operational status with a time from the past X hours on the time axis using at least one display unit of the first display unit, the second display unit, and the third display unit described above. In this case, since the operational status or the operation ratio of the forming device 10 can be easily checked at any time, information on the operational status according to the time can be easily identified. Therefore, it is possible to improve the quality and productivity of products formed by the forming device 10.

The display device 102 may display a fourth display unit that displays a comprehensive graph showing a change status of device operation data related to forming quality for the past X hours, which can be arbitrarily set from the current time point, with a product on a horizontal axis. In this case, it is possible to easily identify the transition of forming quality in the forming device 10.

A method of displaying an operational status of a forming device 10 is a display method of displaying an operational status of a forming device 10 using a screen of a display device 102 provided in a management device 200 for a multi-unit management system that manages a plurality of forming devices 10. The display device 102 can display an operation status image in which operation statuses of the plurality of forming devices 10 are collectively displayed in a split screen format for the plurality of forming devices 10, and the display device 102 can also display an overall image GF6 in which an operational status of only the corresponding forming device is shown in detail in a case where a specific portion of a split screen for each forming device in the operation status image GF5 is clicked.

In the method of displaying the operational status of the forming device 10, the operation statuses of the plurality of forming devices 10 can be collectively identified in the operation status image GF5. Further, the operation status of a specific forming device 10 can be identified in the overall image GF6. Accordingly, it is possible to appropriately manage the plurality of forming devices 10, and to appropriately improve the quality and productivity of products formed by the forming devices 10.

The display device 102 may display a fifth display unit that displays an abnormality history image GF7 by being selected from a menu screen provided separately from the first, second, and third display units. In this case, the abnormality history of the forming device 10 can be identified on the fifth display unit.

The detection contents of at least one of heating abnormality and fluid sealing leakage abnormality may be detected from the change status of the device operation data related to forming quality displayed on the fourth display unit to detect state abnormality, and the detection contents may be displayed on the display device 102. In this case, it is possible to quickly detect state abnormality based on the device operation data that affects forming quality, and to notify a worker of the state abnormality.

The production management system 100 according to the present embodiment is a production management system 100 for a forming device 10 that heats a metal pipe material 5 (metal material) to form the metal pipe material **5,** and manages a temperature of each metal pipe material in a case where the metal pipe material 5 is subjected to hot forming, as a production management parameter.

The production management system 100 is a production management system 100 for the forming device 10 that heats the metal pipe material 5 to form the metal pipe material 5. With regard to this, the production management system 100 manages the temperature of each metal pipe material in a case where the metal pipe material 5 is subjected to hot forming, as a production management parameter. For this reason, a user can perform the quality control of a formed product by checking the temperature of the metal pipe material 5 for each product that is the production management parameter related to quality. As described above, it is possible to improve the quality and productivity of a product formed by the forming device 10.

The production management system 100 according to the present embodiment is a production management system 100 for a forming device 10 that supplies fluid to a metal pipe material 5 to form the metal pipe material 5, and manages a fluid pressure of each metal pipe material 5 in a case where the metal pipe material 5 is formed using fluid, as a production management parameter.

The production management system 100 is a production management system 100 for a forming device 10 that supplies fluid to a metal pipe material 5 to form the metal pipe material 5. With regard to this, the production management system 100 manages the fluid pressure of each metal pipe material 5 in a case where the metal pipe material 5 is formed using fluid, as a production management parameter. For this reason, a user can perform the quality control of a formed product by checking the fluid pressure for each product that is the production management parameter related to quality. As described above, it is possible to improve the quality and productivity of a product formed by the forming device 10.

In a case where a material to be formed is changed, the production management system 100 may change a display format on the display device 102. In this case, a user can easily monitor the change of the material to be formed.

In a case where state abnormality occurs in the forming device 10, the production management system 100 may cause the display device 102 to display the state abnormality. In this case, a user can quickly check the state abnormality.

The production management system 100 may detect state abnormality by detecting the detection contents of at least one of heating abnormality and fluid sealing leakage abnormality, and cause the display device 102 to display the detection contents. In this case, a user can quickly check heating abnormality and fluid sealing leakage abnormality that are important abnormality.

The present invention is not limited to the embodiment described above.

The production management system 100 including the forming device 10 shown in Fig. 2 has been exemplified in the above-described embodiment. Alternatively, the production management system 100 may perform the production management of a forming device that performs heating without supplying fluid, for example, a forming device for hot stamping. The forming device for hot stamping performs furnace heating instead of electric heating, and also does not perform expansion forming using fluid. Therefore, the metal material may not be a metal pipe material, and may be a metal plate material or the like.

The production management system 100 may perform the production management of a forming device that supplies fluid without performing heating, for example, a forming device for hydroforming. The forming device for hydroforming does not perform heating.

Furthermore, manufacturing numbers or QR codes (registered trademark) may be stamped on metal materials, and, in a case where abnormality occurs, a metal material determined to be abnormal may be specified and a management parameter (a material temperature, a fluid pressure, or the like) determined to be abnormal in the production management system may be specified and displayed. In this way, a metal material determined to be abnormal can be specified and the cause of abnormality can be specified.

### Reference Signs List

5 Metal pipe material (metal material)
10 Forming device
100 Production management system
101 Control device
102 Display device
200 Management device

## Claims

1. A method of displaying an operational status of a forming device, which heats a metal material to form the metal material, on a screen of a display device, the method comprising:
displaying an operational status with a time from past X hours on a time axis, using at least one display unit of a first display unit that displays the operational status of the forming device in the past X hours, which is arbitrarily settable from a current time point, at an operation ratio of 0 to 100%, a second display unit that distinguishes and displays whether or not a formed product is changed, and a third display unit that displays cumulative numbers of formed products and pass/fail thereof for each time t.

2. The method of displaying an operational status of a forming device according to claim 1,
wherein the display device displays a fourth display unit that displays a comprehensive graph showing a change status of device operation data related to forming quality for the past X hours, which is arbitrarily settable from the current time point, with a product on a horizontal axis.

3. A method of displaying an operational status of a forming device using a screen of a display device provided in a management device for a multi-unit management system that manages a plurality of forming devices,
wherein the display device displays an operation status image in which operation statuses of the plurality of forming devices are collectively displayed in a split screen format for the plurality of forming devices, and
the display device also displays an overall image in which an operational status of only the corresponding forming device is shown in detail in a case where a specific portion of a split screen for each forming device in the operation status image is clicked.

4. The method of displaying an operational status of a forming device according to claim 1,
wherein the display device displays a fifth display unit that displays an abnormality history image by being selected from a menu screen provided separately from the first, second, and third display units.

5. The method of displaying an operational status of a forming device according to claim 2,
wherein detection contents of at least one of heating abnormality and fluid sealing leakage abnormality are detected from the change status of the device operation data related to the forming quality displayed on the fourth display unit to detect state abnormality, and the detection contents are displayed on the display device.
